# EUROPÄISCHE PATENTSCHRIFT

(11) **EP 0 689 752 B1**
(45) Veröffentlichungstag und Bekanntmachung des Hinweises auf die Patenterteilung: **29.04.1998**
(21) Anmeldenummer: 94908955.1
(22) Anmeldetag: 08.03.1994
(51) Int. Cl.: H04Q 11/04, H04M 11/06, G06F 13/00

(54) **ISDN-ADAPTERKARTE**
ISDN ADAPTER BOARD
CARTE D'ADAPTATION RNIS

(30) Priorität: 13.03.1993 DE 9303712 U
(43) Veröffentlichungstag der Anmeldung: 03.01.1996
(73) Patentinhaber: ELSA Aktiengesellschaft, 52070 Aachen (DE)
(72) Erfinder: KOENZEN, Ralf, D-52134 Herzogenrath (DE)
(74) Vertreter: Kohlmann, Kai, Dipl.-Ing.
(86) Internationale Anmeldenummer: DE9400245
(87) Internationale Veröffentlichungsnummer: WO9422271

(56) Entgegenhaltungen:
- EP-A- 0 350 402
- WO-A-90/04907
- WO-A-91/19404
- DE-A- 4 038 578

## Beschreibung

Die Erfindung betrifft eine passive ISDN-Adapterkarte für die Datenübertragung mit einem Rechner sowie ein Verfahren, um eine passive ISDN-Adapterkarte zu einer an einem seriellen Anschluß eines Rechners zu betreibenden Datenübertragungseinrichtung kompatibel zu machen.

Mittels passiver ISDN-Adapterkarten lassen sich zwischen in verschiedenster Weise miteinander verbundenen Rechnern Daten über große Entfernung austauschen. Gewöhnlicherweise ist für den Austausch von Daten ein Netz, ein Rechner, ein Kommunikationsprogramm und ggf. ein Gerät für die Datenumwandlung erforderlich. Eine passive ISDN-Karte ist beispielsweise aus der WO 91/19404 bekannt. Ferner ist aus der WO 90/04907 eine Adapterkarte für das digitale ISDN-Netz bekannt, die den Anschluß sowohl von ISDN-Geräten als auch analogen Geräten an den ISDN-Anschluß ermöglicht.

Soll die Datenübertragung beispielsweise über das Telefonnetz erfolgen, erledigen Modems und Akkustikkoppler die notwendige Datenumwandlung, die für die Verbindung zwischen dem Telefonnetz und dem Personalcomputer erforderlich ist. Für die Einspeisung in das Telefonnetz ist es zunächst erforderlich, die digitalen Daten des Computers in analoge und beim Empfänger die analogen in digitale Daten umzuwandeln. Die Erfindung betrifft jedoch die Datenübertragung im ISDN-Netz, wobei ISDN (Integrated Services Digital Network) für ein Dienste integrierendes digitales Fernmeldenetz steht. In einem solchen Netz kommen aktive und passive ISDN-Adapterkarten zum Einsatz, wobei sich die passiven von den aktiven Karten darin unterscheiden, daß sie keinen eigenen Prozessor zur Abwicklung der Kommunikationsprotokolle aufweisen. Die Protokolle werden bei solchen passiven Karten auf der sowieso vorhandenen CPU (Recheneinheit) des Endgerätes (Personalcomputers) abgewickelt.

Um mit den angeschlossenen Geräten, sei es nun ein Modem oder eine ISDN-Adapterkarte kommunizieren zu können, bedarf es eines Datenfernübertragungs-Anwendungsprogrammes (Kommunikationsprogramm). Um die für Modems bereits vorhandenen Kommunikationsprogramme auch für passive ISDN-Adapterkarten weiter benutzen zu können, ist die vollständige Kompatibilität der Ansteuerung der passiven ISDN-Adapterkarte zu einem an den seriellen Anschlüssen des Datenendgerätes angeschlossenen Modem eine wesentliche Voraussetzung.

Aus dem Stand der Technik sind bisher lediglich zwei Ansätze bekannt, um eine ISDN-Adapterkarte zu einem an den seriellen Anschlüssen angeschlossenen Modem kompatibel zu machen.

Die erste Lösung verwendet eine aktive ISDN-PC-Adapterkarte, also eine Karte mit eigenem Prozessor. In diesem Fall verhält sich die ISDN-Adapterkarte tatsächlich wie ein externes, an der seriellen Schnittstelle angeschlossenes Modem. Eine vollständige Kompatibilität kann erreicht werden. Die aktive Auslegung der ISDN-Adapterkarte, die neben den entsprechenden Peripheriebausteinen auch noch CPU, RAM und ROM bedingt, ist aus Kostengründen häufig weder erwünscht noch notwendig.

Da letztlich die vollständige Kompatibilität der ISDN-Adapterkarte zu einem an den seriellen Anschlüssen angeschlossenen Modem ausschließlich durch Hardware-Kompatibilität zu den bekannten seriellen Controllern, wie er normalerweise zur Anschaltung einer externen Datenübertragungseinrichtung verwendet wird, hergestellt werden kann und viele Kommunikationsprogramme diesen seriellen Controller, einen sogenannten UART auf Registerebene direkt ansprechen, existiert in der Regel keine interne Software-Schnittstelle mehr, die einen weiteren Auswerteprozeß erlauben Würde, um den Datenstrom von der Anwendung zur ISDN-Adapterkarte zu verfolgen und entsprechende Steuerinformation, wie beispielsweise Anwahlbefehle herauszufiltern.

Eine denkbare Lösung bestünde darin, auf die INT 14 H-Schnittstelle im BIOS zurückzugreifen. Generell bestünde nämlich am INT 14 H die Möglichkeit, daß sich hier ein Auswerteprozeß für die Ansteuerung einer ISDN-Adapterkarte einklinkt, um beispielsweise Wählinformationen zu empfangen.

Da diese im BIOS vorhandene Software-Schnittstelle jedoch nicht sehr leistungsfähig ist, wird sie von den meisten Anwendungsprogrammen nicht unterstützt. Sie greifen direkt auf den seriellen Controller zu.

Eine Lösung, die auf der Benutzung des INT 14 H basieren würde, hätte folglich den Nachteil, daß sie nicht für sämtliche Kommunikationsprogramme geeignet ist.

Der Erfindung lag daher die Aufgabe zugrunde, eine passive ISDN-Adapterkarte zu einem an den seriellen Anschlüssen angeschlossenen Modem kompatibel zu machen, ohne daß für den Auswerteprozeß auf die INT 14 H-Schnittstelle zurückgegriffen wird, d.h. es mußte eine Möglichkeit gefunden werden, die nur noch hardwaremäßig vorliegenden Steuerinformationen des Anwendungsprogrammes dem Auswerteprozeß zuzuleiten.

Die Lösung basiert auf der Idee, eine extern angeschlossene Datenübertragungseinrichtung unter Mithilfe des Prozessors der Datenendeinrichtung zu simulieren. Im einzelnen wird die Datenübertragungseinrichtung durch einen an sich bekannten seriellen Controller, wie er normalerweise zur Einschaltung einer externen Datenübertragungseinrichtung verwendet wird, einen mit dem seriellen Controller verbundenen, die CPU des Endgerätes mitnutzenden ISDN-Datenübertragungs-Controller, sowie einen mit dem ISDN-Datenübertragungs-Controller verbundenen, die CPU des Endgerätes mitnutzenden ISDN-Anschluß-Controller simuliert.

Mit "ISDN-Datenübertragungs-Controller" wird die Komponente einer ISDN-Adapterkarte bezeichnet,die eine Umwandlung von Daten derart durchführt, daß diese Daten in einem ISDN-Nutzkanal (B-Kanal) gesendet werden können, bzw. daß vom ISDN empfangene Daten eines Nutzkanals zur Weiterverarbeitung auf der Adapterkarte zur Verfügung stehen.

Mögliche ISDN-Datenübertragungs-Controller sind beispielsweise ein V.110 Controller oder ein HDLC Controller.

ISDN-Datenübertragungs-Controller verfügen in der Regel über eine Schnittstelle zum ISDN, sowie eine oder mehrere Schnittstellen, z.B. serielle und parallele Schnittstellen, über die die Daten für das ISDN bereitgestellt, bzw. in Empfang genommen werden können. Zum Teil ist auch die Datenübertragung zwischen diesen letztgenannten Schnittstellen möglich.

Mit "ISDN-Anschluß-Controller" wird die Komponente einer ISDN-Adapterkarte bezeichnet, die als Bindeglied zwischen den internen Signalen der Adapterkarte und dem ISDN-Anschluß wirkt. Dabei kommen als ISDN-Anschlüsse z.B. der SO-Bus, der S2m- oder UpO-Anschluß in Frage.

Die Aufgaben des ISDN-Anschlußcontrollers bestehen im Wesentlichen in der
- Erzeugung des ISDN-Übertragungssignales entsprechend des verwendeten Anschlusses
- Bereitstellung der unterschiedlichen ISDN-Übertragungskanäle(Nutz-(B) und Steuer-(D) -kanäle) für andere Komponenten
- Realisierung des Steuerkanal-Protokolls (D-Kanal) (optional)

Die Lösung basiert weiter auf der Idee, die nur hardwaremäßig vorliegenden Steuerinformationen des Kommunikationsprogrammes zunächst auf der Adapterkarte mit dem seriellen Controller zu empfangen und über einen ISDN-Datenübertragungs-Controller an die CPU des Endgerätes zurückzugeben. Ein dort im Hintergrund laufendes Steuerprogramm für die passive ISDN-Adapterkarte wertet die Steuerinformationen aus, um so z.B. die entsprechenden ISDN-Verbindungen aufzubauen.

Rückmeldungen an das Datenfernübertragungsanwendungsprogramm laufen auf dem umgekehrten Weg, über den ISDN-Datenübertragungs-Controller, sowie den seriellen Controller zum Datenfernübertragungsanwendungsprogramm.

In der Datenübertragungsphase selbst werden die Daten über den ISDN-Datenübertragungs-Controller auf der passiven ISDN-Adapterkarte in das ISDN-Netz eingespeist und brauchen daher vom Endgerät nicht mehr bearbeitet zu werden. Hierdurch entsteht für die CPU des Endgerätes keine höhere Belastung als beim Anschluß eines Modems oder einen aktiven ISDN-Adapterkarte.

Die erfindungsgemäßen ISDN-Adapterkarten eignen sich insbesondere für PC-und aufwärtskompatible Rechner. Als serieller Controller haben sich UARTs (Universal Asynchronous Receiver/Transmitter) als besonders geeignet herausgestellt. Der ISDN-Datenübertragungs-Controller entspricht vorzugsweise der CCITT-Empfehlung V.110.

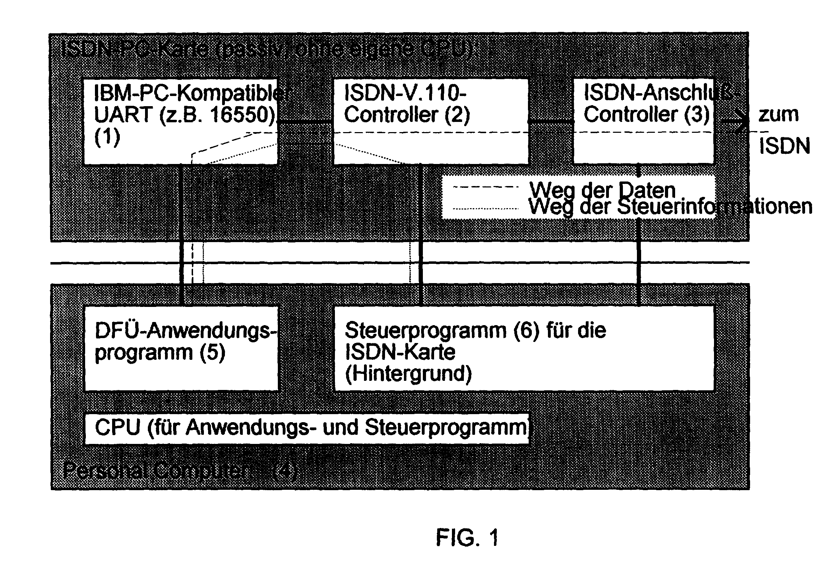

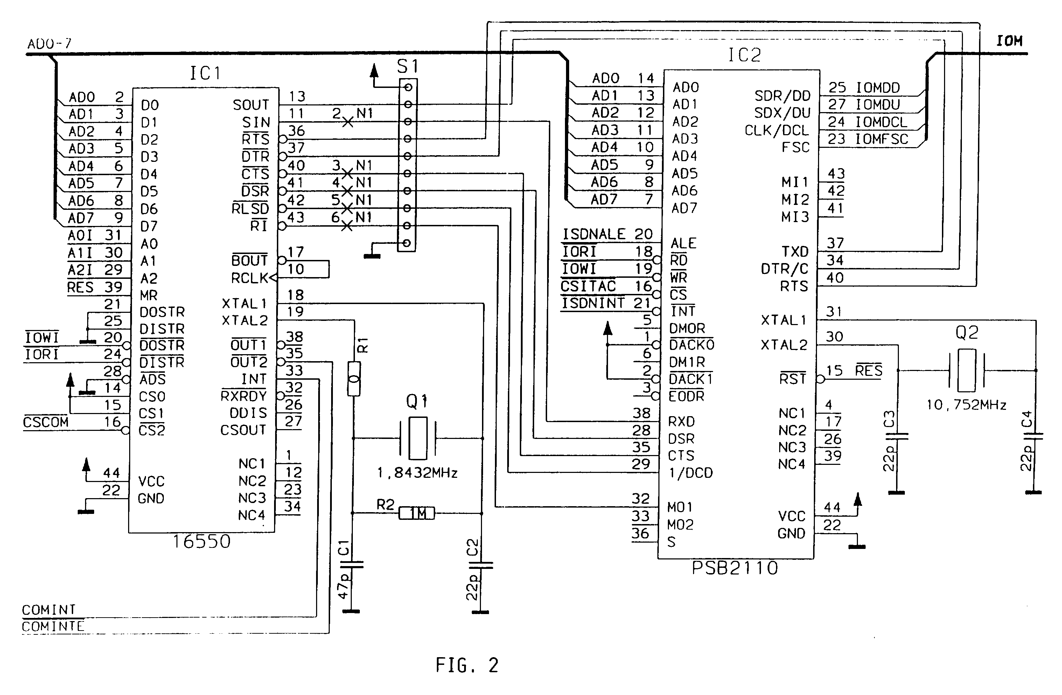

Nachfolgend wird die erfindungsgemäße passive ISDN-Adapterkarte anhand eines in den Figuren 1 und 2 dargestellten (Block)-Schaltbildes des näheren erläutert.

Die erfindungsgemäße ISDN-Adapterkarte besteht aus einem seriellen Controller 1, einem ISDN-V.110-Controller 2, einem ISDN-Anschlußcontroller 3, sowie weiteren, im Blockschaltbild nicht näher dargestellten ISDN-Chips. Ferner ist aus dem Blockschaltbild ein Personalcomputer 4 als Datenendgerät ersichtlich, auf dem ein Datenfernübertragungsanwendungsprogramm 5 und im Hintergrund ein Steuerprogramm 6 für die ISDN-Karte läuft. Befindet sich die von dem Datenendgerät 4 und den Bausteinen 1, 2 und 3 der ISDN-Adapterkarte simulierte Datenübertragungseinrichtung in der Kommandophase, d.h. sie wartet beispielsweise auf Wahlinformationen, so gelangen die in dem Blockschaltbild gepunktet dargestellten Steuerinformationen von dem Datenfernübertragungsanwendungsprogramm 5 über den seriellen Controller 1 und dem ISDN-V.110-Controller 2 zu dem Steuerprogramm 6 für die ISDN-Adapterkarte.

Nachdem das Steuerprogramm 6 über den ISDN-Anschlußcontroller 3 eine Verbindung zu der Gegenstelle hergestellt hat, gelangen die Daten des Datenfernübertragungsanwendungsprogrammes über den seriellen Controller 1 und den ISDN-V.110-Controller 2 direkt über den ISDN-Anschlußcontroller 3 zum ISDN-Netz. Eine Unterstützung der CPU des Personalcomputers für den Datentransfer zum ISDN-Netz ist nicht erforderlich. Der Weg der Daten ist in dem Blockschaltbild gestrichelt dargestellt.

Nach Abschluß der Datenübertragung gelangen die gepunktet dargestellten Steuerinformationen wieder wie vorstehend beschrieben zum im Hintergrund ablaufenden Steuerungsprogramm 6, das die ISDN-Verbindung dann beispielsweise auslösen kann.

Die erfindungsgemäße Lehre umfaßt selbstverständlich auch solche Ausführungen, bei denen mehrere der Bausteine in einen integrierten Schaltkreis zusammengefaßt sind.

Der aus Figur 2 ersichtliche Schaltplan zeigt die beiden wesentlichen Komponenten der erfindungsgemäßen ISDN-Adapterkarte, einmal den mit IC 1 bezeichneten PC-kompatiblen UART sowie den mit IC 2 bezeichneten ISDN-B-Kanalübertragungsbaustein, an dessen IOM-Anschluß der ISDN-Anschluß-Controller liegt (vgl. (3) Figur 1). Die beiden Bausteine IC 1 und IC 2 sind mit dem Adress- und Datenbus ADO-7 des zugehörigen IBM-kompatiblen Personalcomputers verbunden. Die Adress- und Interuptansteuerung des UARTs (IC 1) erfolgt dabei so, daß er sich kompatibel zu einem normalen seriellen Anschluß eines Personalcomputers verhält.

Die Steuerung des IC 2 erfolgt unabhängig von dem aktuellen Anwendungsprogramm durch ein im Hintergrund des Personalcomputers arbeitendes Steuerprogramm (vgl. (6) Figur 1). Die V.24 Schnittstelle des IC 1 (SOUT-RI) ist mit der V.24 DTE Schnittstelle des IC 2 verbunden. Eine Weiche im IC 2 stellt dann entweder eine direkte Verbindung zum ISDN-Anschluß her (V.110 Datenübertragung; Online-Phase) oder leitet die Daten auf einen im IC 2 integrierten UART der von dem im Hintergrund arbeitenden Steuerprogramm in der Kommandophase bedient wird.

Die einzige Datenverbindung zwischen dem Anwendungsprogramm und dem ISDN-Netz ist somit die hardwaremäßige V.24-Verbindung zwischen dem IC 1 und dem IC 2.

## Patentansprüche

1. Passive ISDN-Adapterkarte für die Datenübertragung mit einem Rechner (4), gekennzeichnet durch
- einen an sich bekannten seriellen Controller (1), wie er normalerweise zur Anschaltung einer externen Datenübertragungseinrichtung verwendet wird, der Steuerinformationen eines auf dem Rechner (4) betriebenen Datenfernübertragungsanwendungsprogramms (5) empfängt,
- einen mit dem seriellen Controller verbundenen, durch die CPU des Rechners (4) gesteuerten ISDN-Datenübertragungs-Controller (2), der die Steuerinformationen an die CPU des Rechners (4) zurückgibt, so daß ein auf der CPU des Rechners (4) im Hintergrund laufendes Steuerprogramm (6) die Steuerinformationen auswertet und die ISDN-Verbindung aufbaut, sowie
- einen mit dem ISDN-Controller (2) verbundenen, von der CPU des Rechners (4) gesteuerten ISDN-AnschlußController (3), wobei während der Datenübertragungsphase die Daten über den seriellen Controller (1), den ISDN-Datenübertragungs-Controller (2) sowie den ISDN-Anschluß-Controller (3) direkt in das ISDN-Netz eingespeist werden, ohne daß eine Bearbeitung der Daten im Rechner (4) erforderlich ist.

2. Passive ISDN-Adapterkarte nach Anspruch 1, dadurch gekennzeichnet, daß der Rechner (4) PC-aufwärtskompatibel ist.

3. Passive ISDN-Adapterkarte nach Anspruch 1 oder 2, dadurch gekennzeichnet, daß auf dem Rechner (4) mindestens das Datenfernübertragungsanwendungsprogramm (5) und im Hintergrund ein Steuerungsprogramm (6) für die passive ISDN-Adapterkarte läuft.

4. Passive ISDN-Adapterkarte nach einem der Ansprüche 1-3, dadurch gekennzeichnet, daß als serieller Controller (1) ein Universal Asynchronous Receiver/Transmitter (UART) eingesetzt wird.

5. Passive ISDN-Adapterkarte nach einem der Ansprüche 1-4, gekennzeichnet durch, einen ISDN-V.110- Controller (2).

6. Passive ISDN-Adapterkarte nach einem der Ansprüche 1-5, gekennzeichnet durch die Daten während der Datenübertragungsphase direkt in das ISDN-Netz einspeisende ISDN-Chips.

7. Verfahren, um eine passive ISDN-Adapterkarte zu einer an einem seriellen Anschluß eines Rechners zu betreibenden Datenübertragungseinrichtung, insbesondere einem Modem, kompatibel zu machen, dadurch gekennzeichnet, daß unter Verwendung der passiven ISDN-Adapterkarte dadurch eine externe Datenübertragungseinrichtung mit Hilfe des Prozessors des Rechners simuliert wird,
- daß Steuerinformationen eines auf dem Rechner (4) betriebenen Datenfernübertragungsanwendungsprogramms (5) zunächst mit einem seriellen Controller (1) empfangen und über einen ISDN-Datenübertragungs-Controller (2) an die CPU des Rechners (4) zurückgegeben werden,
- daß ein auf der CPU des Rechners (4) im Hintergrund laufendes Steuerprogramm (6) die Steuerinformationen auswertet und die ISDN-Verbindung aufbaut,
- während der Datenübertragungsphase die Daten über den seriellen Controller (1), den ISDN-Datenübertragungs-Controller (2) sowie einen ISDN-Anschluß-Controller (3) direkt in das ISDN-Netz eingespeist werden, ohne daß eine Bearbeitung der Daten im Rechner (4) erforderlich ist und
- nach Abschluß der Datenübertragungsphase erneut Steuerinformationen über den seriellen Controller (1) und den ISDN-Datenübertragungs-Controller (2) an das im Hintergrund auf der CPU des Rechners (4) laufende Steuerprogramm (6) zurückgegeben werden.

## Claims

1. Passive ISDN adapter card for data communications with a computer (4), characterized by:
- a serial controller (1) known in and of itself such as one normally used for connecting to an external communications device to receive control information from a communications program (5) running on the computer (4);
- an ISDN communications controller (2), which is connected to the serial controller and controlled by the CPU of the computer (4), and which sends the control information back to the CPU of the computer, so that a control program running in the background on the CPU of the computer can evaluate the control information and establish the ISDN connection; and
- an ISDN port controller (3), which is connected to the ISDN controller (2) and controlled by the CPU of the computer (4), the data being sent during the data transfer phase directly to the ISDN network via the serial controller (1), the ISDN communications controller (2), and the ISDN port controller (3) without any need for the data to be processed in the computer.

2. Passive ISDN adapter card according to claim 1, characterized in that the computer (4) is upwardly PC-compatible.

3. Passive ISDN adapter card according to claim 1 or claim 2, characterized in that at least the communications program (5) and a control program (6) for the passive ISDN adapter card are running on the computer (4), with the control program running in the background.

4. Passive ISDN adapter card according to one of claims 1 - 3, characterized in that a Universal Asynchronous Receiver/Transmitter (UART) is used as the serial controller (1).

5. Passive ISDN adapter card according to one of claims 1 - 4, characterized by an ISDN-V.110 (2) controller.

6. Passive ISDN adapter card according to one of claims 1 - 5, characterized by ISDN chips sending the data during the data transfer phase directly to the ISDN network.

7. Process for making a passive ISDN adapter card compatible with a communications device, especially a modem, to be operated on the serial port of a computer, characterized in that, with the use of the passive ISDN adapter card, an external communications device is simulated by the processor of the computer in that:
- the control information of a communications program (5) running on the computer (4) is received first by a serial controller (1) and then sent back via an ISDN communications controller (2) to the CPU of the computer (4);
- a control program (6) running in the background on the CPU of the computer (4) evaluates the control information and establishes the ISDN connection;
- during the data transfer phase, the data are sent directly to the ISDN network via the serial controller (1), the ISDN communications controller (2), and an ISDN port controller (3) without any need for the data to be processed in the computer (4); and
- upon completion of the data transfer phase, new control information is sent back via the serial controller (1) and the ISDN communications controller (2) to the control program (6) running in the background on the CPU of the computer (4).

## Revendications

1. Carte passive d'adaptation RNIS pour la transmission de données avec un ordinateur (4), caractérisée par
- un contrôleur série (1) connu en soi tel que ceux généralement employés pour relier un dispositif externe de transmission de données, lequel reçoit des informations de commande provenant d'un programme d'application (5) exploité sur l'ordinateur (4) et destiné à la transmission de données à grande distance,
- un contrôleur de transmission de données RNIS (2) relié au contrôleur série et commandé par la CPU de l'ordinateur (4), lequel renvoie les informations de commande à la CPU de l'ordinateur (4) de manière à ce qu'un programme de commande (6) non prioritaire en cours sur la CPU de l'ordinateur (4) puisse évaluer les informations de commande et établir la liaison RNIS, ainsi qu'
- un contrôleur de raccordement RNIS (3) relié au contrôleur RNIS (2) et commandé par la CPU de l'ordinateur (4), les données, pendant la phase de transmission des données, étant directement introduites dans le réseau RNIS par l'intermédiaire du contrôleur série (1), du contrôleur de transmission de données RNIS (2) ainsi que du contrôleur de raccordement RNIS (3), sans qu'il soit nécessaire de traiter les données dans l'ordinateur (4).

2. Carte passive d'adaptation RNIS selon la revendication 1 caractérisée en ce que l'ordinateur (4) présente une compatibilité micro-ordinateur ascendante.

3. Carte passive d'adaptation RNIS selon la revendication 1 ou 2 caractérisée en ce que sur l'ordinateur (4), au moins le programme d'application (5) pour la transmission de données à grande distance et en fond, un programme de commande (6) pour la carte passive d'adaptation RNIS sont en cours.

4. Carte passive d'adaptation RNIS selon l'une des revendications 1 à 3 caractérisée en ce qu'on utilise un émetteur-récepteur asynchrone universel comme contrôleur série (1).

5. Carte passive d'adaptation RNIS selon l'une des revendications 1 à 4 caractérisée par un contrôleur V.110 RNIS (2).

6. Carte passive d'adaptation RNIS selon l'une des revendications 1 à 5 caractérisée par des puces RNIS introduisant directement les données dans le réseau RNIS pendant la phase de transmission des données.

7. Procédé permettant de rendre une carte passive d'adaptation RNIS compatible avec un dispositif de transmission de données, notamment un modem, fonctionnant sur le port série d'un ordinateur,
caractérisé en ce que
- l'utilisation d'une carte passive d'adaptation RNIS, avec l'aide du processeur de l'ordinateur, permet de simuler un dispositif externe de transmission de données,
- des informations de commande provenant d'un programme d'application (5) pour le transmission de données à grande distance exploité sur l'ordinateur (4) sont d'abord reçues au moyen d'un contrôleur série (1) et renvoyées à la CPU de l'ordinateur (4) par l'intermédiaire d'un contrôleur de transmission de données RNIS (2),
- un programme de commande (6) non prioritaire en cours sur la CPU de l'ordinateur (4 évalue les informations de commande et établit la liaison RNIS,
- pendant la phase de transmission des données, celles-ci sont directement introduites dans le réseau RNIS par l'intermédiaire du contrôleur série (1), du contrôleur de transmission de données RNIS (2) ainsi que du contrôleur de raccordement RNIS (3), sans qu'il soit nécessaire de traiter les données dans l'ordinateur (4), et
- à la fin de la phase de transmission des données, des informations de commande passant par le contrôleur série (1) et le contrôleur de transmission de données RNIS (2) sont de nouveau renvoyées au programme de commande (6) non prioritaire en cours sur la CPU de l'ordinateur (4).
